# EUROPEAN PATENT SPECIFICATION

(11) **EP 3 249 255 B1**
(45) Date of publication and mention of the grant of the patent: **21.04.2021**
(21) Application number: 17164243.2
(22) Date of filing: 31.03.2017
(51) Int. Cl.: F16D 23/02

(54) **HIGH-CAPACITY SYNCHRONIZER RING FOR MANUAL TRANSMISSION AND METHOD FOR MANUFACTURING THE SAME**
SYNCHRONRING MIT HOHER KAPAZITÄT FÜR HANDSCHALTGETRIEBE UND VERFAHREN ZUR HERSTELLUNG DAVON
BAGUE DE SYNCHRONISEUR HAUTE CAPACITÉ POUR TRANSMISSION MANUELLE ET SON PROCÉDÉ DE FABRICATION

(30) Priority: 26.05.2016 KR 20160064625
(43) Date of publication of application: 29.11.2017
(73) Proprietor: ETR Co., Ltd., Gyeonggi-do 18336 (KR)
(72) Inventor: YOU, Kwang Suk, Gyeonggi-do 16365 (KR)
(74) Representative: Fennell, Gareth Charles

(56) References cited:
- EP-A1- 1 801 443
- EP-A2- 1 571 361
- DE-U1-202009 011 782
- JP-A- H08 168 845

## Description

### BACKGROUND

### 1. Technical Field

The present invention relates generally to a high-capacity synchronizer ring for a manual transmission and a method for manufacturing the same, and more particularly to a high-capacity synchronizer ring having a new structure in which elasticity is imparted to the synchronizer ring by forming cutout portions in the synchronizer ring and the ring is separated and restored by the elasticity, thereby improving a gear change sensation and thus providing a capacity increasing effect when the high-capacity synchronizer ring is applied to a transmission, and a method for manufacturing the same.

### 2. Description of the Related Art

In general, a synchronizer hub is spline-coupled to the main spindle of a synchromesh-type transmission, and a sleeve that is moved in an axial direction by a shift fork is spline-coupled onto the outer circumferential surface of the synchronizer hub. Furthermore, a synchronizer cone is coupled to one side of the synchronizer hub, and a synchronizer ring that is moved in the axial direction of the main spindle is installed on the outer circumferential surface of the synchronizer cone.

The synchronizer ring performs a clutch function while being moved along the synchronizer cone by the sleeve, and thus serves to guide the synchronizer hub through engagement with the drive gear of a drive shaft that faces the sleeve and also faces the synchronizer ring.

In this case, the sleeve and the drive gear are rotated at different revolutions per minutes. The synchronizer ring, configured to perform a clutch function, synchronizes the revolutions per minutes with each other while performing an alignment operation (the operation of allowing the splines of the sleeve and the tooth of the drive gear to be engaged with each other) so that the sleeve and the drive gear can be engaged with each other.

Accordingly, as the revolutions per minutes of the sleeve and the drive gear are synchronized with each other, the sleeve and the drive gear are engaged with each other without causing the abrasion and damage of the gear.

Meanwhile, when the sleeve and the drive gear are engaged with each other, the splines formed on the outer circumferential surface of the synchronizer ring are engaged with the splines formed on the inner circumferential surface of the metal sleeve, and thus friction occurs on the inner circumferential surface. In other words, the splines formed on the outer circumferential surface of the synchronizer ring are portions that frequently come into contact with the splines formed on the metal sleeve, and the inner circumferential surface located opposite the splines is a portion where friction occurs.

A method for manufacturing a general synchronizer ring is now described in brief. A general synchronizer ring is manufactured in such a manner that a brass or steel billet rod is pressed into a synchronizer ring body having a cylindrical body shape integrated with splines in a hot press state and then screw threads are formed in or a friction material is attached onto the inside of the synchronizer ring body.

When a molybdenum or carbon friction material is bonded onto the inner circumferential surface of the steel synchronizer ring, the manufacture of the synchronizer ring is completed. The synchronizer ring that has been described so far is a low-capacity single synchronizer ring using a single frictional surface, which corresponds to a basic relevant technology.

As one scheme for increasing the capacity of a synchronizer ring, a structure for increasing friction capability by additionally inserting an intermediate ring into a center portion to increase a friction surface and then disposing an inner ring on an inner side has been proposed. An example of this is a double or triple synchronizer ring.

Synchronizer ring systems that are chiefly being used currently are: a single-type synchronizer ring system using a single friction material on the inner side of a ring; and a double-type synchronizer ring system using two friction surfaces.

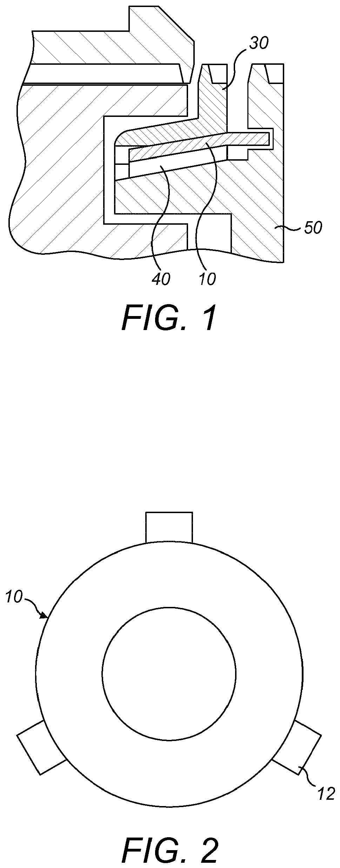

Furthermore, a triple synchronizer ring configured to have three frictional surfaces by employing a frictional surface on an inner side in addition to two frictional surfaces has been proposed (see FIG. 1). In this case, protrusion portions are formed on the outer side of the single intermediate ring, and are engaged with a cone gear (see FIG. 2) .

Generally, conventional synchronizer ring systems cannot use a small taper angle due to concern about being caught with a surface that must be separated after the performance of a friction function, but commonly use a taper angle of about 7 degrees. The reason for this is that, when the taper angle is small, capacity is increased, but a problem arises in that a gear change sensation is considerably degraded due to the phenomenon of being caught and damage may occur in a serious case.

In order to mitigate the above problem, efforts to improve a gear change sensation while increasing capacity by improving the frictional surfaces of synchronizer rings for mass production in various manners have been made. An example of these efforts is a technique of making inner and outer taper angles different from each other in order to increase capacity while reducing the number of parts. In other words, an attempt to achieve the effect of obtaining an energizing effect by reducing an inner taper angle and improving a gear change sensation by increasing an outer angle has been made.

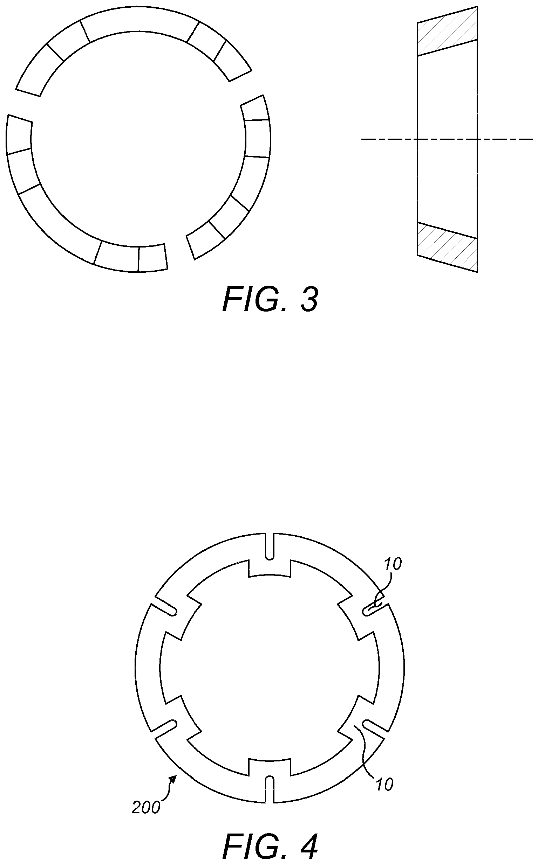

As a conventional art, Korean Patent Application Publication No. 10-2015-0070972 discloses a configuration that satisfies the above two conditions by making the inner and outer angles of a synchronizer ring different from each other. Furthermore, as an improved technology, there has been an attempt to overcome a gear change sensation degradation problem attributable to the phenomenon of being caught in such a manner that an intermediate ring is divided into three segments, and the three segments are combined together during operation and separated after the completion of a function (see FIG. 3).

However, according to this technology, the number of parts is large because the three ring segments are used, and the intermediate ring cannot be stamped from an iron plate because the inner and outer angles of the intermediate ring are different from each other, with the result that the technology is disadvantageous in terms of a manufacturing process. Furthermore, the three ring segments cannot stably perform a function, and thus the technology has a problem in terms of function and operation in that the reliability of the function and operation are considerably reduced.

In other words, the above conventional art still has the disadvantage of separately manufacturing three ring segments against the task of increasing capacity while reducing the number of parts. Furthermore, the inner and outer taper angles are different from each other, and thus the synchronizer ring cannot be easily manufactured by a stamping press process using an iron plate having a uniform thickness, thereby causing the disadvantage of increasing manufacturing costs. Moreover, the three parts are operated as a system during operation and separation, and thus a problem arises in that operating stability is degraded.

DE202009011782U1 describes a synchronizer ring for a manual gearbox.

EP1571361A2 describes a process for producing a cone ring which can be accommodated in a transmission unit.

JPH08168845A describes a method of manufacturing a synchronizer cone.

EP1801443A1 describes a synchromesh system for a vehicle gear transmission, the synchromesh system including a synchroniser ring.

### SUMMARY

In order to overcome the problems of the conventional art, the present invention is intended to overcome problems, including the unstable performance of a function, a disadvantage in a manufacturing process, and an increase in manufacturing costs, occurring in the conventional synchronizer ring having three ring segments in order to increase capacity. Accordingly, an object of the present invention is to

provide a new synchronizer ring in which elasticity is imparted to a single intermediate ring by forming cutout portions in the intermediate ring, the synchronizer ring is formed in a single structure, and the ring is separated and restored by the elasticity, thereby providing a stable gear change sensation.

Furthermore, another object of the present invention is to provide a new method for manufacturing a new synchronizer ring, which has a simple manufacturing process, which is advantageous for manufacture because a plate thinner than a conventional iron plate is used, and which can reduce material costs.

In order to achieve the above object, there is provided a high-capacity synchronizer ring for a manual transmission, the high-capacity synchronizer ring including a ring formed by working an iron plate having a uniform thickness, wherein the ring has a single structure in which a plurality of protrusion portions is formed on the inner side thereof and a plurality of cutout portions located at the centers of the respective protrusion portions is formed in the outer side thereof, and the ring is bent to be tapered inward, wherein second cutout portions are formed between every two neighboring ones of the protrusion portions at equal intervals.

Furthermore, there is provided a method for manufacturing a high-capacity synchronizer ring for a manual transmission, the method including: stamping a ring from an iron plate having a uniform thickness so that two to eight protrusion portions are formed on the inner side of the ring and a plurality of cutout portions located at the centers of the respective protrusion portions is formed in the outer side of the ring, and second cutout portions are formed between every two neighboring ones of the protrusions at equal intervals; and bending the stamped ring so that the stamped ring is tapered inward, thereby manufacturing a synchronizer ring having a single structure.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a sectional view showing a structure in which a conventional triple synchronizer ring has been applied to a gear synchronization unit;
FIG. 2 is a conceptual diagram showing a conventional synchronizer ring (intermediate ring) having a structure in which protrusions are formed on the outside of the synchronizer ring;
FIG. 3 is a diagram showing the structure of a conventional intermediate ring having three separate segments, which is disclosed in Korean Patent Application Publication No. 10-2015-0070972;
FIG. 4 is a diagram conceptually showing the structure of a cut-out ring that is stamped from an iron plate during a process of manufacturing a synchronizer ring so that cutout portions are formed in the outer side thereof and protrusion portions are formed on the inner side thereof according to an embodiment of the present invention;
FIG. 5 is a diagram showing the structure of a finished product of a synchronizer ring that is tapered by bending the stamped cut-out ring of FIG. 4 inward according to the present invention;
FIG. 6 is a diagram showing a structure in which second cutout portions are additionally formed between the cutout portions of the synchronizer ring of FIG. 5 according to another embodiment of the present invention;
FIG. 7 is a diagram showing a combination structure in which the synchronizer ring according to the present invention is applied as an intermediate ring;
FIG. 8 is a diagram showing a finished product of a synchronizer ring in which cut pieces are formed by performing cutting twice for each of the cut pieces according to still another embodiment of the present invention; and
FIG. 9 is a side sectional view of FIG. 8.

### DETAILED DESCRIPTION

The present invention will be described using embodiments in detail below with reference to the accompanying drawings below.

As shown in FIGS. 4 to 6, according to the present invention, a synchronizer ring 100 includes a single structure in which a plurality of cutout portions 110 and 111 is formed in the outer side of the ring and a plurality of protrusion portions 120 is formed on the inner side thereof.

According to a preferred embodiment of the present invention, the synchronizer ring 100 is formed by cutting and bending an iron plate having a uniform thickness. Accordingly, in order to manufacture the synchronizer ring 100, a cut-out ring 200 is stamped from an iron plate and is then bent, and thus the synchronizer ring 100 can be easily manufactured using a stamping process and a bending process.

According to the present invention, the iron plate that is used to manufacture the cut-out ring 200 may be an iron plate having a thickness of 0.5-4 mm, preferably 1-2 mm.

According to a preferred embodiment of the present invention, the plurality of protrusion portions 120 formed on the inner side of the synchronizer ring 100 are two to eight protrusion portions that have a predetermined width and are arranged at equal intervals.

According to a preferred embodiment of the present invention, each of the plurality of cutout portions 110 formed in the outer side of the synchronizer ring 100 has a shape that is formed by cutting out a partial portion in a direction from the center of a corresponding one of the protrusion portions 120 to the outside.

Furthermore, the cutout portions may be formed as cut pieces 140 by performing cutting twice in symmetry to the center of each of the protrusion portions for each of the cut pieces 140 and then bending the upper portions 141 of the cut pieces 140 by an angle of 10-14 degrees in the outer direction of the ring, thereby increasing separation force related to the outer ring.

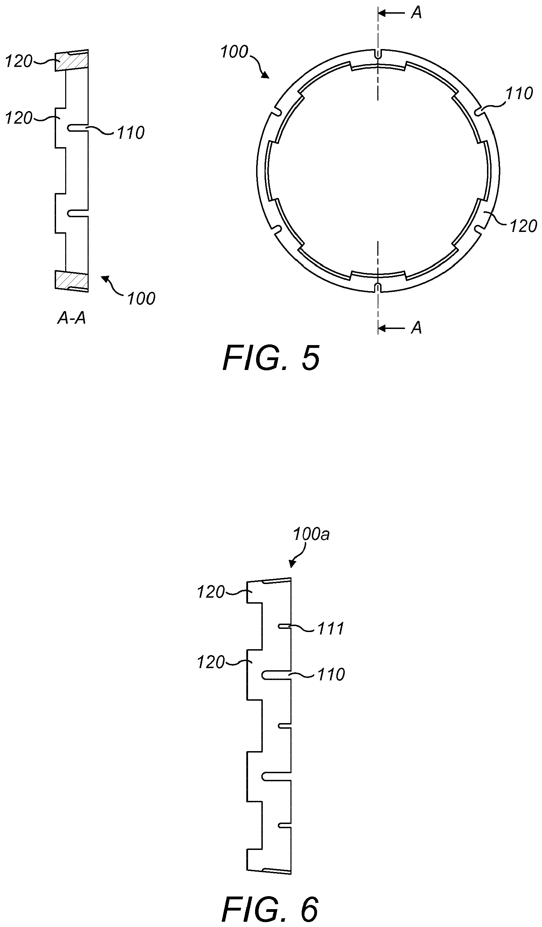

As described above, the synchronizer ring 100 according to the present invention is manufactured using the cut-out ring 200 that is stamped from an iron plate. The structure of the cut-out ring 200 is shown in the specific embodiment of FIG. 5.

FIG. 4 shows an embodiment of the cut-out ring 200 that has six protrusion portions 120 and six cutout portions 110.

FIG. 5 is a plan view and A-A line sectional view of the synchronizer ring 100 that is manufactured as a finished product by bending the cut-out ring 200, stamped as shown in FIG. 4, so that the cut-out ring 200 is tapered inward.

According to the present invention, the number of cutout portions 110 is basically the same as the number of protrusion portions 120. Furthermore, the second cutout portions 111 may be formed between every two neighboring ones of the protrusion portions 120 so that all the cutout portions 110 and 111 are formed at equal intervals. This structure is shown in FIG. 6.

FIG. 6 shows the side of a synchronizer ring 100a according to another embodiment, which is formed by stamping a cut-out ring 200 from an iron plate and bending the cut-out ring 200 inward. In this case, there is shown a side view of a finished product of the synchronizer ring 100a having a structure in which six protrusion portions 120 and six cutout portions 110 are formed and six second cutout portions 111 are additionally formed between the cutout portions 110.

According to a preferred embodiment of the present invention, the cutout portions 110 located at the centers of the respective protrusion portions 120 may have a longer shape than the second cutout portions 111 located between the protrusion portions 120, as shown in FIG. 6. This arises from the fact that, in the cut-out ring 200, the width of the portions in which the protrusion portions 120 are formed is larger than that of the portions in which the protrusion portions 120 are formed.

According to a preferred embodiment of the present invention, the synchronizer ring 100 is an intermediate ring having a single structure, and may be configured in a shape in which a taper angle t ranges from 3 to 7 degrees.

The synchronizer ring 100 having the above structure according to the present invention has a taper angle t. The protrusion portions 120 are portions 600 to be combined with the outer ring 300, and have a configuration bent in a vertical state (t=0) without a tapered angle t. Accordingly, the synchronizer ring 100 can be easily engaged with the outer ring 300.

Furthermore, according to a preferred embodiment of the present invention, a friction member 130 having high durability may be attached onto the tapered surface of the synchronizer ring 100.

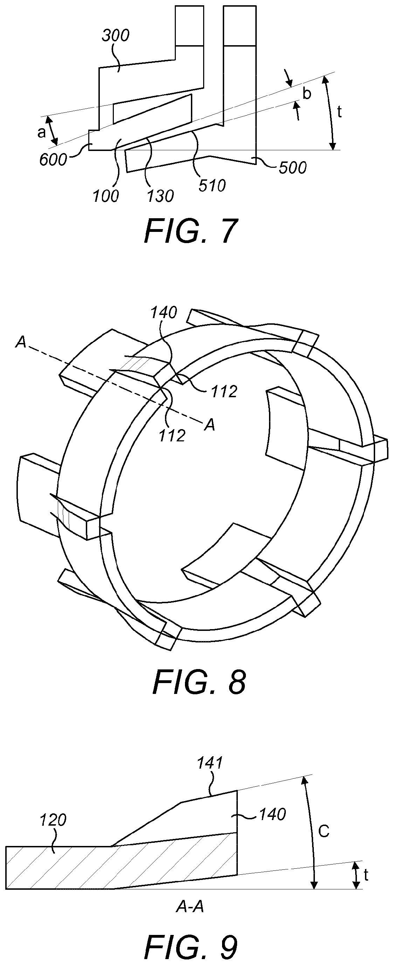

According to a preferred embodiment of the present invention, the cutout portions 112 of the ring may be formed as cut pieces 140 that are formed by performing cutting twice in symmetry to the center of each of the protrusion portions for each of the cut pieces 140. The angle C between the upper portions 141 of the cut pieces and the vertical position (t=0) of the ring may range from 10 to 14 degrees. Accordingly, separation force related to the outer ring 300 can be improved (see FIGS. 8 and 9).

In order to manufacture the above-described synchronizer ring 100 according to the present invention, a ring is stamped from a thin iron plate having the same inner and outer angles and a predetermined thickness, in which case the ring is stamped such that the protrusion portions 120 are formed on the inner side of the ring and the partial cutout portions 110 are formed in the outer side of the ring.

FIG. 5 shows an embodiment of the cut-out ring 200 that is formed through a stamping step. As can be seen in FIG. 5, stamped protrusion portions 120 are formed on the inner side of a ring. This is a new structure different from a structure in which the intermediate ring 10 of the conventional double or triple synchronizer ring system has protrusion portions 12 protruding to the outside (see FIG. 3). FIG. 1 shows a combination structure in which the conventional intermediate ring 10 protruding to the outside is combined with an outer ring 30, an inner ring 40, and a gear cone 50.

According to the present invention, the synchronizer ring 100 having a single structure may be manufactured by bending the cut-out ring 200, formed by stamping an iron plate, in a tapered shape. In this case, the bending process may be performed using a common method.

According to a preferred embodiment of the present invention, when the bending process is performed, the bending process may be preferably performed by adjusting the taper angle t of the synchronizer ring 100 to 3-7°.

In other words, the synchronizer ring 100 according to the present invention has a surface that is tapered in an inward vertical direction. In this case, the tapered surface may be configured to have a taper angle of 3-5 degrees with respect to a vertical direction. Accordingly, a circle that is formed by the outer side of the ring corresponding to the side in which the cutout portions 110 and 111 are formed is a concentric circle that has a diameter larger than that of a circle that is formed by the inner side on which the protrusion portions 120 are formed.

According to the present invention, only the protrusion portions 120 may be configured to be in a vertical surface state unlike the tapered surface by bending protrusion portion 120 once more.

Frictional force against the synchronized portion of a gear cone 500 may be increased by attaching a friction member 130 made of friction material having high durability onto the tapered inside surface of the synchronizer ring 100 or 100a that is manufactured according to the present invention. This friction member 130 may be made of common friction material.

The combination structure of the synchronizer ring 100 according to the present invention is shown in FIG. 7.

The synchronizer ring 100 according to the present invention is applied as an intermediate ring. The synchronizer ring 100 can desirably perform the function of a synchronizer ring as an intermediate ring having a single structure without requiring the addition of an inner ring inside it.

In particular, in the present invention, the protrusion portions 120 of the synchronizer ring 100 are combined with the outer ring 300, and the rotational force of the outer ring 300 is transferred to the synchronizer ring 100. The synchronizer ring 100 may apply frictional force onto the gear cone 500 on the opposite side as an intermediate ring due to the transferred rotational force. Since the intermediate ring combination structure of the synchronizer ring 100 according to the present invention is engaged with a combination groove formed in the outer ring 300, the synchronizer ring 100 is significantly different from the conventional intermediate ring 10 in that it has a combination structure in a direction opposite to that of a structure (see FIG. 1) in which the conventional intermediate ring 10 is combined with the inner gear cone 50. In FIG. 7, reference symbol 600 designates the portion in which the synchronizer ring 100 according to the present invention and the outer ring 300 are combined with each other.

According to a preferred embodiment of the present invention, the synchronizer ring 100 according to the present invention is applied as an intermediate ring. As shown in FIG. 7, the angle t of the intermediate ring may be configured to have an angular difference a of about 1 degree with respect to the angle of the outer ring 300 and also have an angular difference b of about 1 degree with respect to the outer angle of the gear cone 500 located on an inner side. The angle of the synchronizer ring 100 according to the present invention can be provided by adjusting the taper angle t. In the configuration of the present invention, the synchronizer ring 100 itself has a uniform thickness, and thus the angles of the inside and outside surfaces thereof are the same. In other words, although the synchronizer ring 100 itself has the same inner and outer angles, efficient frictional force against the gear cone 500 can be applied using only the synchronizer ring (intermediate ring) 100 having a single structure by adjusting the taper angle t, as described above.

According to the present invention, the cutout portions 110 located in the outer side of the synchronizer ring 100 are constricted by the outer ring 300 during the operation of the ring, in which case deformation corresponding to the angular difference a is formed and thus an angular difference with respect to the inner gear cone 500 is removed by the deformation, with the result that frictional force is generated and thus synchronization is achieved. In this case, the angular differences a and b are reduced due to a change in the taper angle t and, simultaneously, the gaps of the cutout portion 110 are reduced in a circumferential direction. Accordingly, constriction force is generated, and thus constriction force is generated in both directions in which frictional force is generated.

After the synchronizer ring 100 according to the present invention has completed the above-described friction function, the constriction force is immediately and spontaneously released by elastic restoring force, and thus the separation force of the ring is considerably increased, thereby exhibiting a very excellent effect for improvement in a gear change sensation.

Unlike the conventional configuration of Korean Patent Application Publication No. 10-2015-0070972 in which the intermediate ring is divided into three segments and a function is exercised in such a manner that the three segments are separated from one another and combined together during operation, the present invention exercises its function in such a manner that the tapered surface is elastically deformed in the direction of the angle of the frictional surface 510 of the gear cone 500 due to the cutout portions 110 of the bent ring. At the same time, the large diameter portion performs a compression action in which a radius is reduced also in a circumferential direction, and obtains restoring force in the circumferential direction after the completion of synchronization.

Accordingly, the present invention includes an assembly structure for the synchronizer ring in which the synchronizer ring 100 according to the present invention, configured as described above, is used as an intermediate ring, the outer ring 300 is located outside the synchronizer ring 100, the gear cone 500 is disposed inside the synchronizer ring 100, the protrusion portions 120 of the intermediate ring are engaged with the outer ring 300, and the inside surface of the intermediate ring is combined with the gear cone 500 so that friction occurs therebetween.

As described above, the present invention is configured such that all the elastic deformation force of the synchronizer ring in radial and circumferential directions contributes to improvement in a gear change sensation during the separation of the ring. In other words, the synchronizer ring according to the present invention is configured to have an angular difference of about 1 degree with respect to another operating part.

Accordingly, the synchronizer ring according to the present invention generates just enough deformation to remove the angular difference during operation for synchronization, and generates elastic restoring force after the completion of the operation like a spring, thereby facilitating the separation of the ring. Furthermore, capacity is increased by reducing an angle with respect to another part, and separation force decreasing accordingly is generated by elastic restoring force.

In particular, the synchronizer ring according to the present invention uses a plate thinner than a commonly used iron plate in order to ensure effective elastic force, it is advantageous in terms of manufacture and material costs can be reduced. The material of the iron plate may be a material effective for securement of elasticity, such as bearing steel, spring steel or the like currently being used.

As described above, according to the present invention, a gear change sensation, i.e., the highest requirement for the synchronizer ring, is improved, the structure and manufacturing process of the synchronizer ring having high capacity while having a small number of parts are simplified, and manufacturing costs can be reduced by reducing the amount of material used.

Furthermore, the present invention overcomes the problem of unstable operation attributable to the combination of a large number of parts when a function is exercised in the conventional art, solves a problem related to quality management when mass production is performed, and mitigates a disadvantage for a reduction in manufacturing costs.

The synchronizer ring according to the present invention is an intermediate ring that is applied to a gearshift, and is a single body part. The angles of the inner and outside surfaces of the synchronizer ring are the same, and thus the synchronizer ring has no difference in thickness. Accordingly, the synchronizer ring can be manufactured by a progressive forming process using an iron plate. Furthermore, the inner taper angle of the synchronizer ring may be, for example, a low angle of about 4 degrees, and high braking force can be obtained using a single synchronizer ring, thereby achieving the effect of increasing capacity and the effect of reducing manufacturing costs.

The synchronizer ring according to the present invention is configured using the single partially cut-out ring instead of the conventional three intermediate ring segments to exercise the same function, thereby removing the possibility of a disharmony problem attributable to the three ring segments and thus ensuring reliability.

Furthermore, the synchronizer ring employs a small taper angle, and thus large capacity can be achieved and simultaneously the number of parts can be reduced, thereby providing the effect of reducing manufacturing costs.

Furthermore, the angles of the inner and outer sides of the intermediate ring, i.e., thicknesses, are the same, and thus the synchronizer ring having a single structure can be manufactured by simply stamping a cut-out ring from an iron plate roll by using a press, with the result that the synchronizer ring can be easily manufactured, the number of parts is reduced, and a manufacturing process is simplified, thereby providing the effect of reducing manufacturing costs.

In particular, the number of parts of the synchronizer ring is small, and thus a non-uniform quality problem that occurs due to the dispersion of quality during mass production can be fundamentally overcome. Furthermore, elasticity is utilized when related parts are separated after synchronization, and thus the effect of considerably improving a gear change sensation can be achieved.

Furthermore, a thin iron plate is used, and thus material costs can be reduced. Furthermore, the protrusions are formed on the inner side, and thus the amount of discarded iron plate material is reduced, thereby providing the effect of reducing material costs.

Although the specific embodiments of the present invention have been disclosed for illustrative purposes, those skilled in the art will appreciate that various modifications, additions and substitutions are possible without departing from the scope of the invention as disclosed in the accompanying claims.

## Claims

1. A high-capacity synchronizer ring for a manual transmission, the high-capacity synchronizer ring comprising a ring (100) formed by working an iron plate having a uniform thickness, wherein the ring has a single structure in which a plurality of protrusion portions (120) is formed on an inner side thereof and a plurality of cutout portions (110) located at centers of the respective protrusion portions is formed in an outer side thereof, and the ring is bent to be tapered inward, **characterized in that** second cutout portions (111) are formed between every two neighboring ones of the protrusion portions (120) at equal intervals.

2. The high-capacity synchronizer ring of claim 1, wherein the protrusion portions (120) are two to eight protrusion portions that are spaced apart from each other at equal intervals.

3. The high-capacity synchronizer ring of claim 1 or 2, wherein the synchronizer ring (100) has a tapered surface narrowing in an inner vertical direction, and the tapered surface is a surface tapered at a taper angle of 3-7 degrees with respect to a vertical surface.

4. The high-capacity synchronizer ring of claim 1, wherein the cutout portions (110) of the ring (100) are formed as cut pieces by performing cutting twice in symmetry to a center of each of the protrusion portions for each of the cut pieces and then bending upper portions of the cut pieces by an angle of 10-14 degrees with respect to a vertical state of the ring.

5. The high-capacity synchronizer ring of claim 1 or 2, wherein a friction member (130) having high durability is attached onto the inner tapered surface of the synchronizer ring (100).

6. A method for manufacturing a high-capacity synchronizer ring for a manual transmission, the method comprising:
stamping a ring (100) from an iron plate having a uniform thickness so that two to eight protrusion portions (120) are formed on an inner side of the ring and a plurality of cutout portions (110) located at centers of the respective protrusion portions is formed in an outer side of the ring, and second cutout portions (111) are formed between every two neighboring ones of the protrusion portions (120) at equal intervals; and bending the stamped ring so that the stamped ring is tapered inward, thereby manufacturing a synchronizer ring having a single structure.

7. An assembly structure for a synchronizer ring, wherein the high-capacity synchronizer ring for manual transmission set forth in claim 1 or 2 is employed as an intermediate ring (100), an outer ring (300) is located outside the high-capacity synchronizer ring, a gear cone (500) is disposed inside the high-capacity synchronizer ring, the protrusion portions (120) of the intermediate ring are engaged with the outer ring, and an inside surface of the intermediate ring is combined with the gear cone so that friction is generated therebetween.

## Patentansprüche

1. Synchronring mit hoher Kapazität für ein Handschaltgetriebe, wobei der Synchronring mit hoher Kapazität einen Ring (100) umfasst, der durch Bearbeiten einer Eisenplatte mit einer gleichmäßigen Dicke gebildet ist, wobei der Ring eine einzelne Struktur aufweist, in der mehrere Vorsprungsabschnitte (120) auf einer Innenseite davon ausgebildet sind und mehrere Ausschnittsabschnitte (110), die sich in der Mitte der jeweiligen Vorsprungsabschnitte befinden, in einer Außenseite davon ausgebildet sind, und der Ring so gebogen ist, dass er sich nach innen verjüngt, **dadurch gekennzeichnet, dass** diese zweiten Ausschnittsabschnitte (111) zwischen jeweils zwei benachbarten der Vorsprungsabschnitte (120) in gleichen Intervallen ausgebildet sind.

2. Synchronring mit hoher Kapazität nach Anspruch 1, wobei die Vorsprungsabschnitte (120) zwei bis acht Vorsprungsabschnitte sind, die in gleichen Intervallen voneinander beabstandet sind.

3. Synchronring mit hoher Kapazität nach Anspruch 1 oder 2, wobei der Synchronring (100) eine sich verjüngende Oberfläche aufweist, die sich in einer inneren vertikalen Richtung verengt, und die sich verjüngende Oberfläche eine Oberfläche ist, die sich in einem Verjüngungswinkel von 3-7 Grad in Bezug auf eine vertikale Oberfläche verjüngt.

4. Synchronring mit hoher Kapazität nach Anspruch 1, wobei die Ausschnittsabschnitte (110) des Rings (100) als Schnittstücke ausgebildet werden, indem für jedes Schnittstück zweimal symmetrisch zu einer Mitte jedes der Vorsprungsabschnitte ein Schnitt vorgenommen wird und dann obere Abschnitte der Schnittstücke um einen Winkel von 10-14 Grad in Bezug auf einen vertikalen Zustand des Rings gebogen werden.

5. Synchronring mit hoher Kapazität nach Anspruch 1 oder 2, wobei ein Reibungselement (130) mit hoher Haltbarkeit an der inneren sich verjüngenden Oberfläche des Synchronrings (100) angebracht ist.

6. Verfahren zur Herstellung eines Synchronrings mit hoher Kapazität für ein Handschaltgetriebe, wobei das Verfahren umfasst:
Stanzen eines Rings (100) aus einer Eisenplatte mit einer gleichmäßigen Dicke, so dass zwei bis acht Vorsprungsabschnitte (120) auf einer Innenseite des Rings ausgebildet werden und mehrere Ausschnittsabschnitte (110), die sich in der Mitte der jeweiligen Vorsprungsabschnitte befinden, in einer Außenseite des Rings ausgebildet werden und zweite Ausschnittsabschnitte (111) zwischen jeweils zwei benachbarten Abschnitten der Vorsprungsabschnitte (120) in gleichen Intervallen ausgebildet werden; und Biegen des gestanzten Rings so, dass sich der gestanzte Ring nach innen verjüngt, wodurch ein Synchronring hergestellt wird, der eine einzige Struktur aufweist.

7. Baugruppenstruktur für einen Synchronring, wobei der Synchronring mit hoher Kapazität für ein Handschaltgetriebe nach Anspruch 1 oder 2 als Zwischenring (100) verwendet wird, wobei ein Außenring (300) außerhalb der Synchronrings mit hoher Kapazität angeordnet ist, ein Zahnradkegel (500) innerhalb des Synchronrings mit hoher Kapazität angeordnet ist, die Vorsprungsabschnitte (120) des Zwischenrings mit dem Außenring in Eingriff sind und eine Innenfläche des Zwischenrings mit dem Zahnradkegel so kombiniert ist, dass dazwischen Reibung erzeugt wird.

## Revendications

1. Bague de synchroniseur haute capacité pour transmission manuelle, la bague de synchroniseur haute capacité comprenant une bague (100) formée en façonnant une plaque en fer présentant une épaisseur uniforme, la bague étant dotée d'une seule structure dans laquelle une pluralité de parties (120) en saillie est formée sur un côté intérieur de celle-ci et une pluralité de parties (110) de découpe situées aux centres des parties respectives en saillie étant formée dans un côté extérieur de celle-ci, et la bague étant courbée pour présenter une conicité vers l'intérieur, **caractérisée en ce que** des secondes parties (111) de découpe sont formées entre chaque paire de parties voisines parmi les parties (120) en saillie à intervalles égaux.

2. Bague de synchroniseur haute capacité selon la revendication 1, les parties (120) en saillie étant deux à huit parties en saillie qui sont espacées les unes par rapport aux autres à intervalles égaux.

3. Bague de synchroniseur haute capacité selon la revendication 1 ou 2, la bague (100) de synchroniseur présentant une surface conique rétrécissant dans une direction verticale intérieure, et la surface conique étant une surface conique à un angle de conicité de 3 à 7 degrés par rapport à une surface verticale.

4. Bague de synchroniseur haute capacité selon la revendication 1, les parties (110) de découpe de la bague (100) étant formées comme des pièces coupées en effectuant une coupe deux fois en symétrie par rapport à un centre de chacune des parties en saillie pour chacune des pièces coupées puis en courbant des parties supérieures des pièces coupées d'un angle de 10 à 14 degrés par rapport à un état vertical de la bague.

5. Bague de synchroniseur haute capacité selon la revendication 1 ou 2, un organe (130) de frottement doté d'une durabilité élevée étant fixé sur la surface conique intérieure de la bague (100) de synchroniseur.

6. procédé de fabrication d'une bague de synchroniseur haute capacité pour transmission manuelle, le procédé comprenant:
l'emboutissage d'une bague (100) à partir d'une plaque en fer présentant une épaisseur uniforme de telle façon que deux à huit parties (120) en saillie soient formées sur un côté intérieur de la bague et qu'une pluralité de parties (110) de découpe situées aux centres des parties respectives en saillie soit formée dans un côté extérieur de la bague, et que des secondes parties (111) de découpe soient formées entre chaque paire de parties voisines parmi les parties (120) en saillie à intervalles égaux; et la courbure de la bague emboutie de telle façon que la bague emboutie présente une conicité vers l'intérieur, fabriquant ainsi une bague de synchroniseur dotée d'une seule structure.

7. Structure d'ensemble pour une bague de synchroniseur, la bague de synchroniseur haute capacité pour transmission manuelle selon la revendication 1 ou 2 étant employée comme bague intermédiaire (100), une bague extérieure (300) étant située à l'extérieur de la bague de synchroniseur haute capacité, un cône (500) à engrenage étant disposé à l'intérieur de la bague de synchroniseur haute capacité, les parties (120) en saillie de la bague intermédiaire étant en prise avec la bague extérieure, et une surface intérieure de la bague intermédiaire étant combinée avec le cône à engrenage de telle façon qu'un frottement soit généré entre ceux-ci.
